# FASCICULE DE BREVET EUROPEEN

(11) **EP 1 645 070 B1**
(45) Date de publication et mention de la délivrance du brevet: **14.04.2010**
(21) Numéro de dépôt: 04744497.1
(22) Date de dépôt: 06.07.2004
(51) Int. Cl.: H04L 9/32, H04L 29/06

(54) **METHODE DE SECURISATION D'UN CERTIFICAT ELECTRONIQUE**
VERFAHREN ZUR SICHERUNG EINES ELEKTRONISCHEN ZERTIFIKATS
METHOD FOR SECURING AN ELECTRONIC CERTIFICATE

(30) Priorité: 14.07.2003 CH 123203
(43) Date de publication de la demande: 12.04.2006
(73) Titulaire: Nagravision SA, 1033 Cheseaux-sur-Lausanne (CH)
(72) Inventeur: STRANSKY, Philippe, CH-1033 Cheseaux-sur-Lausanne (CH)
(74) Mandataire: Wenger, Joel-Théophile
(86) Numéro de dépôt international: PCT/IB2004/051129
(87) Numéro de publication internationale: WO 2005/006646

(56) Documents cités:
- EP-A- 1 282 026
- WO-A-01/39143
- WO-A-03/056749
- WO-A2-02/43309
- US-A1- 2003 084 172

## Description

La présente invention concerne une méthode de sécurisation d'un certificat électronique, en particulier en vue d'éviter sa copie et son utilisation par des tiers.

Un certificat électronique est un fichier numérique que l'on peut comparer à un passeport virtuel.

Comme un passeport, il contient un certain nombre de données personnelles sur son titulaire. Il est délivré par une autorité reconnue qui peut garantir la véracité des informations contenues dans le certificat et son lien indissociable avec son titulaire.

Ce certificat est stocké dans une mémoire d'une unité d'utilisateur telle que le disque dur d'un ordinateur, la mémoire ou la carte SIM d'un téléphone portable, le module de sécurité d'un décodeur de télévision numérique à péage ou tout autre dispositif nécessitant une identification en ligne de son utilisateur. Ce dernier pourra ainsi communiquer sur un réseau de télécommunication de manière sécurisée en associant son certificat aux données transmises.

Le certificat permet par exemple de s'identifier sur Internet, de générer des signatures électroniques pour des transactions à forte valeur ajoutée et de communiquer en toute confidentialité des informations sensibles.

Actuellement, il est possible pour un tiers de copier un certificat à l'insu de son titulaire à l'aide d'un programme adéquat du type cheval de Troie. Le tiers peut ainsi bénéficier abusivement des mêmes privilèges que le titulaire sur l'utilisation de certains services en ligne. Lorsqu'il s'agit de transactions financières ou de droits particuliers sur des produits diffusés, les conséquences d'un tel abus peuvent être particulièrement néfastes pour le titulaire.

Le document US2003/0084172 décrit une méthode pour obtenir un service sur un réseau de communication de données comprenant une inscription auprès d'une autorité. Les résultats de cette inscription sont utilisés pour obtenir un service auprès d'un fournisseur. Ces résultats contiennent des données propres à l'utilisateur que le fournisseur est capable de vérifier en sollicitant l'autorité. L'inconvénient de cette méthode est qu'elle utilise des données liées à un utilisateur, données qui peuvent être captées et reproduites par un autre utilisateur dans le but d'obtenir des prestations de manière frauduleuse.

Selon une variante du document US2003/0084172, le certificat ne peut être utilisé qu'à un lieu précis. L'inconvénient de cette variante est que si l'unité est déplacée, le certificat ne sera plus valide même si l'utilisateur ne change pas.

Le document US2003/0069915 décrit une méthode d'authentification d'utilisateur d'un service d'impression dans un réseau d'un hôtel, qui dans une variante vérifie aussi l'adresse IP de l'unité utilisateur.

Le but de la présente invention est de présenter une méthode améliorée.

Ce but est atteint par la méthode selon la revendication 1.

Ces étapes concernent essentiellement la phase d'initialisation. Lors de l'exploitation, une phase de vérification est activée lorsque le titulaire du certificat exploite son unité utilisateur en se servant du certificat conjointement à un service prédéterminé provenant d'un fournisseur de services. Elle comprend les étapes suivantes:
· identification du titulaire par la transmission du certificat au fournisseur de services,
· détermination d'un identifiant réseau propre à l'unité utilisateur par le fournisseur de services,
· transmission de l'ensemble formé par le certificat et l'identifiant de réseau à l'autorité,
· vérification dudit ensemble par comparaison avec les informations enregistrées dans la base de donnée lors de la phase d'initialisation,
· transmission du résultat de la comparaison au fournisseur de service qui autorise le service préalablement requis à l'utilisateur connecté en fonction dudit résultat.

L'identifiant réseau propre à l'unité utilisateur consiste en des données servant à identifier de manière unique l'unité auprès d'un réseau de télécommunication. Ce réseau servant à accéder successivement l'autorité et le fournisseur de services; cet identifiant n'étant pas transmis en tant que tel par l'unité d'utilisateur mais déterminé d'une manière autonome par soit l'autorité, soit le fournisseur sur la base des paramètres matériels de la communication. Selon la méthode de l'invention, il s'agit d'apparier le certificat avec le matériel des unités d'utilisateur ou plus précisément avec les unités qui utilisent des services en ligne dans le but d'éviter la copie abusive du certificat de la mémoire d'une unité vers celle d'une autre.

Dans le cas de la connexion à Internet, chaque ordinateur transmet un numéro le définissant de manière unique sur le réseau. Ce numéro, appelé adresse MAC (Media Access Control), identifiant la configuration du matériel d'un utilisateur est déterminé automatiquement par le serveur du fournisseur de services. Le certificat d'une unité utilisateur connectée à ce serveur peut être ainsi 'personnalisé' à l'aide de cette adresse. Cette adresse n'est donc pas communiquée comme un paramètre par l'unité d'utilisateur mais résulte de sa capacité à communiquer sur un réseau. Cette adresse ne peut être modifiée (au moins facilement) par le titulaire du certificat ou par un tiers ayant copié ce certificat.

Dans le cadre de la téléphonie mobile GSM, le numéro unique identifiant chaque téléphone portable, appelé IMEI (International Mobile Equipment Identity), connecté au réseau peut être utilisé comme identificateur de l'unité utilisée.

De manière similaire, un décodeur de télévision à péage disposant d'une voie de retour peut être identifié par un opérateur par son numéro unique caractérisant son matériel ou par le numéro de téléphone utilisé par le modem de la voie de retour.

En général, tout appareil connecté à un réseau possède une adresse ou un numéro spécifique à sa configuration matérielle permettant son identification par un serveur ou par les autres appareils avec lesquels il communique.

Durant la phase d'initialisation, l'unité utilisateur est connectée directement à un serveur géré par l'autorité chargé d'une part de recevoir des données relatives au certificat ou le certificat en entier et d'autre part de déterminer un identifiant réseau concernant l'unité utilisateur. L'autorité enregistre dans une base de données cet identifiant en le reliant avec le certificat concerné.

Il est possible de limiter l'initialisation dans le temps en fixant une période maximale pendant laquelle il est possible d'enregistrer un certificat auprès de l'autorité, par exemple à partir de la transmission du certificat à l'utilisateur.

Cette procédure est de préférence liée à l'installation du certificat dans l'appareil de l'utilisateur. Cette procédure inclut un appel à l'autorité pour établir et ajouter aux données du certificat, l'identifiant de réseau de cet appareil. Il est possible de rendre cette connexion obligatoire, par exemple lors de ce dialogue entre l'autorité et l'appareil utilisateur, l'autorité transmet une instruction qui valide le certificat et l'autorise à l'utilisation.

Selon une variante de la méthode de l'invention, un code ou mot de passe peut être utilisé lors de la connexion de l'utilisateur au serveur de l'autorité. Ce code sert en quelque sorte à autoriser le lien entre l'identifiant de réseau et un certificat auprès de l'autorité émettrice du certificat. Il est de préférence transmis à l'utilisateur par une voie distincte de celle du certificat afin de conserver sa confidentialité. Par exemple, ce mot de passe ou PIN code peut être envoyé à l'utilisateur par voie postale comme cela se pratique pour les cartes bancaires. Après l'enregistrement de l'identifiant réseau avec le certificat, le mot de passe peut être rendu inutilisable afin d'éviter l'enregistrement multiple d'un même certificat pour des unités différentes.

Dans cette variante, une durée de validité du code peut être fixée de manière analogue à la variante précédente afin de permettre un enregistrement dans une période limitée. En cas de dépassement de cette période, il serait nécessaire de requérir un nouveau code auprès de l'autorité moyennant d'éventuels frais supplémentaires.

Selon la méthode selon l'invention, plusieurs unités appartenant à un utilisateur commun et ayant chacune un identifiant réseau différent sont enregistrées en association avec un même certificat. Ceci pourrait se présenter lors de l'utilisation d'un certificat sur un support amovible telle qu'une carte à puce. L'utilisation du certificat est alors limitée pour le groupe d'unités dont l'identifiant est dûment enregistré dans la base de données de l'autorité. Ce type d'enregistrement pourrait s'effectuer non seulement avec un mot de passe unique mais avec une liste de mots de passe, différent pour chaque unité.

L'invention sera mieux comprise grâce à la description détaillée qui va suivre et qui se réfère aux figures annexées, illustrant la méthode selon l'invention, données à titre d'exemple nullement limitatif.
- La figure 1 représente un schéma bloc illustrant la phase d'initialisation d'un certificat sur une unité utilisateur
- La figure 2 représente un schéma bloc illustrant la phase de vérification d'un certificat sur une unité utilisateur

Le centre de gestion de l'autorité (AU) regroupe un centre d'émission de certificats (CI) chargé de produire et gérer les certificats et un centre de vérification (VE) relié à une base de données (BD) contenant les certificats (C) accompagnés d'informations propres (HID) aux unités exploitées par les titulaires des certificats (C).

Dans le cas d'ordinateurs connectés à Internet, les services utilisant les certificats consistent par exemple en une connexion sécurisée pour le commerce électronique, un accès privilégié à des programmes ou à des données protégées.

A l'initialisation soit lors de l'acquisition d'un certificat par un utilisateur, ce dernier reçoit avec son nouveau certificat (C) un mot de passe qui est en général sous forme d'un code PIN (Personal Identification Number). L'utilisateur va pouvoir se connecter auprès du centre de vérification VE et annoncer les caractéristiques de son certificat. Ce code lui permet de prouver qu'il est le titulaire légitime de ce certificat et une fois introduit, le centre de vérification VE va lire l'identifiant de réseau HID de l'utilisateur et associer cet identifiant au certificat C.

Cette étape d'initialisation peut se faire avec plusieurs dispositifs pouvant contenir le certificat de l'utilisateur si par exemple ce certificat est sur un support amovible telle qu'une carte à puce. Tous les identifiants de réseau HID seront associés avec ce certificat grâce à l'introduction du mot de passe. Dans le but de simplifier la procédure au niveau de l'utilisateur, il n'est pas nécessaire, ni utile, que l'identifiant HID soit connu de ce dernier. L'enregistrement de ce paramètre avec le certificat C s'effectue donc de manière automatique après l'introduction d'un code PIN valide.

Le certificat C est ainsi activé et utilisable pour autant que l'utilisateur le conserve sur les dispositifs dont les identifiants HID ont été enregistrés. Un transfert de ce certificat C sur un autre ordinateur reste possible, mais celui-ci devient inutilisable car l'adresse MAC de ce second ordinateur n'est pas enregistrée dans la base de donnée BD de l'autorité AU. On constate ainsi que le certificat est lié à des ordinateurs bien particuliers qui se distinguent des autres, dans cet exemple, par leurs adresses MAC.

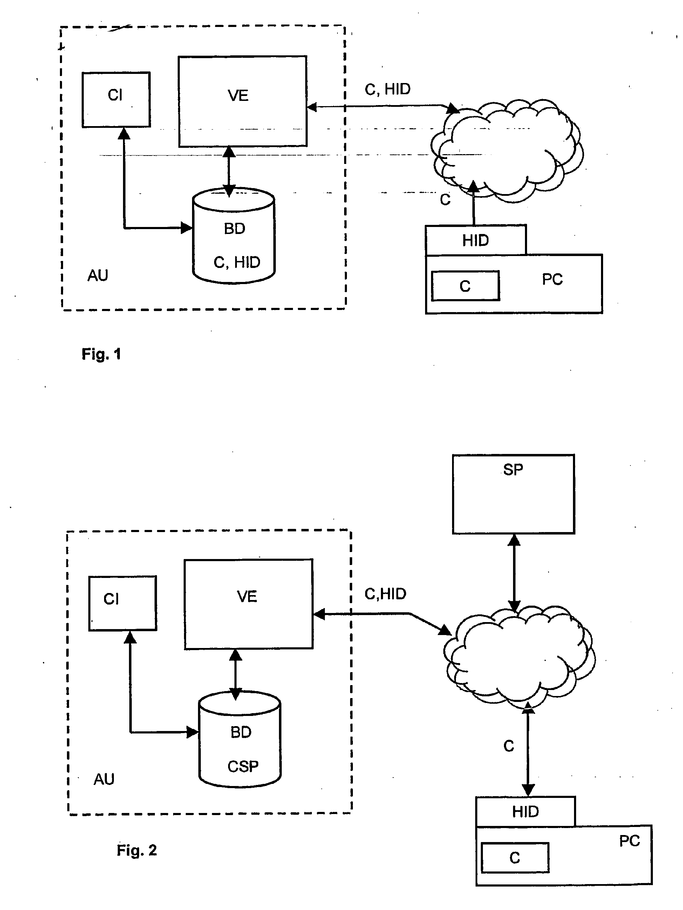

La figure 2 illustre la phase d'utilisation d'un tel certificat. L'utilisateur accède à un service géré par un fournisseur de service SP. Ce dernier lit le certificat que lui transmet l'utilisateur et détermine un identifiant HID permettant de définir le dispositif de l'utilisateur PC sur le réseau utilisé pour accéder au fournisseur SP.

Dans cet exemple, l'identificateur correspond à l'adresse MAC de l'ordinateur PC du titulaire du certificat C.

Le fournisseur de services SP détermine l'adresse MAC de l'ordinateur PC qui lui est connecté puis transmet cette adresse au centre de vérification VE avec le certificat C.

Le centre de vérification peut comparer les données transmises par le fournisseur SP avec celles stockées dans la base de données BD. Le résultat de la comparaison sera transmis au fournisseur SP qui autorise l'utilisation du service seulement si l'adresse MAC courante de l'ordinateur requérant un service correspond à une des adresses associées au certificat C dans la base de données BD.

Selon l'invention, un certificat (C) peut être enregistré avec plusieurs adresses IP appartenant à des ordinateurs gérés par un même titulaire. Le certificat est alors stocké dans la base de données de l'autorité avec des liens pointant vers les différentes adresses avec lesquelles il a été activé.

Un certificat, enregistré auprès de l'autorité selon la méthode de l'invention, peut aussi être désactivé. En effet, il est souhaitable de permettre à un titulaire de pouvoir mettre à jour la base de donnée de l'autorité lorsqu'il change d'unité ou désire résilier son certificat. Comme l'autorité n'a pas de contrôle direct sur les particularités des ordinateurs des utilisateurs, les modifications sont effectuées d'une façon similaire à l'activation d'un nouveau certificat lors de la phase d'initialisation.

Sur requête, le titulaire reçoit un nouveau code PIN ou mot de passe servant à réactiver un certificat prédéfini sur un nouvel ordinateur et/ou le désactiver. Dans le cas d'une réactivation, lors de l'accès du titulaire à l'autorité, cette dernière détermine la nouvelle adresse MAC pour la transmettre à la base de données afin d'associer cette nouvelle adresse avec le certificat.

Lors d'une modification de configuration telle qu'une désactivation, dans une première variante l'identification du titulaire d'un certificat se fait par la détermination de l'identifiant réseau HID. Le titulaire transmet le certificat au centre de vérification et se dernier détermine l'identifiant réseau HID. La comparaison avec les données contenues dans la base de données BD permet d'authentifier l'utilisateur et de l'autoriser à introduire des modifications de son profil.

Dans une autre variante, l'introduction d'un mot de passe PIN est impérativement requise pour toute modification.

## Revendications

1. Méthode de sécurisation et de vérification d'un certificat électronique (C) délivré par une autorité (AU) à un titulaire, ledit certificat (C) étant stocké dans une mémoire de chacune d'une pluralité d'unités utilisateur (PC) exploitées par le titulaire, chaque unité utilisateur (PC) étant apte à transmettre tout ou partie des données du certificat (C) à un serveur géré par l'autorité (AU), **caractérisée en ce que**, lors d'une phase d'initialisation, ladite méthode comprend les étapes suivantes:
• détermination par l'autorité (AU) pour chaque unité utilisateur (PC) d'un identifiant réseau (HID) basé sur des paramètres de configuration matérielle reçus de cette unité utilisateur (PC),
• enregistrement des identifiants réseau (HID) dans une base de données (BD) du serveur de l'autorité (AU) en reliant lesdits identifiants réseau (HID) avec les données du certificat (C), lesdites données du certificat (C) donc comportant une pluralité de liens, chaque lien pointant vers un identifiant réseau (HID) distinct identifiant de manière unique une des unités utilisateur (PC) exploitées par le titulaire.

2. Méthode selon la revendication 1, **caractérisée en ce que** l'enregistrement d'un identifiant réseau (HID) en liaison avec les données du certificat (C) est soumis à l'introduction d'un mot de passe (PIN) par le titulaire.

3. Méthode selon la revendication 2, **caractérisée en ce que** le mot de passe (PIN) associé au certificat (C) est reçu par le titulaire du certificat (C) par une voie distincte de celle par laquelle sont transmises les données du certificat (C).

4. Méthode selon la revendication 2, **caractérisée en ce que** le mot de passe (PIN) associé au certificat (C) est mis hors service après l'opération de liaison des données du certificat (C) avec les identifiants réseau (HID) dans la base de données (BD) du serveur de l'autorité (AU).

5. Méthode selon la revendication 1, **caractérisée en ce que** chaque identifiant réseau (HID) consiste en une adresse ou un numéro identifiant de manière unique l'unité sur le réseau auquel elle est connectée.

6. Méthode selon la revendication 1, **caractérisée en ce qu'**une phase de vérification est effectuée lors de l'accès à un service auprès d'un fournisseur de service (SP) par une unité d'utilisateur (PC), cette méthode comprenant les étapes suivantes :
identification du titulaire par la transmission des données du certificat (C) au fournisseur de services (SP),
· détermination, par le fournisseur de services (SP), d'un identifiant réseau (HID) basé sur des paramètres de configuration matérielle de l'unité utilisateur (PC),
· transmission de l'ensemble formé par les données du certificat (C) et l'identifiant réseau (HID) à l'autorité (AU),
· vérification dudit ensemble par comparaison avec les informations enregistrées dans la base de donnée (BD) du serveur de l'autorité (AU) lors de la phase d'initialisation,
- transmission du résultat de la comparaison au fournisseur de service (SP) qui autorise le service préalablement requis à l'utilisateur connecté en fonction dudit résultat.

## Claims

1. Method for securing and verifying an electronic certificate (C) issued by an authority (AU) to an owner, said certificate (C) being stored in a memory of each user unit (PC) of a plurality of user units operated by the owner, each user unit (PC) being able to transmit all or part of the data of the certificate (C) to a server managed by the authority (AU), **characterized in that**, during an initialization phase, said method comprises the following steps:
- determining by the authority (AU) for each user unit a network identifier (HID) based on hardware configuration parameters received from this user unit (PC),
- storing the network identifiers (HID) in a database (BD) of the server of the authority (AU) by linking said network identifiers (HID) with the data of the certificate (C), said data of the certificate (C) thus having a plurality of links, each link pointing towards a distinct network identifier (HID) identifying in a unique way one of the user units (PC) operated by the owner.

2. Method as claimed in claim 1, **characterized in that** the storage of a network identifier (HID) in connection with the data of the certificate (C) is subject to the introduction of a password (PIN) by the owner.

3. Method as claimed in claim 2, **characterized in that** the password (PIN) associated with the certificate is received by the owner of the certificate through a different channel from the one used for transmitting the data of the certificate (C).

4. Method as claimed in claim 2, **characterized in that** the password (PIN) associated with the certificate (C) is disabled after the linking operation of the data of the certificate (C) with the network identifiers (HID) in the database (BD) of the server of authority (AU).

5. Method as claimed in claim 1, **characterized in that** each network identifier (HID) consists of an address or a number identifying in a unique way the unit on the network to which it is connected.

6. Method according to claim 1, wherein a verification step is carried out during the access to a service from a service supplier (SP) by a user unit (PC), this method comprises the steps of:
- identifying the owner by the transmission of the certificate (C) to the service supplier (SP),
- determining, by the service supplier (SP), a network identifier (HID) based on hardware configuration parameters of the user unit (PC),
- transmitting the set formed by the certificate (C) and the network identifier (HID) to the authority (AU),
- verifying said set by comparison with the data registered in the database (BD) during the initialization step,
- transmitting the result of the comparison to the service supplier (SP) that authorizes the previously requested service to the connected user according to said result.

## Patentansprüche

1. Verfahren zum Absichern und zum Verifizieren eines von einer Vergabestelle (AU) an einen Inhaber vergebenen elektronischen Zertifikats (C), wobei das Zertifikat (C) in einem Speicher einer jeden einer Anzahl von Nutzereinheiten (PC), die von dem Inhaber benutzt werden, gespeichert ist, wobei jede Nutzereinheit (PC) dazu eingerichtet ist, vollständig oder einen Teil der Daten des Zertifikats (C) an einen durch die Vergabestelle (AU) betriebenen Server zu übermitteln, **dadurch gekennzeichnet, dass** während einer Initialisierungsphase das Verfahren die folgenden Schritte aufweist:
• durch die Vergabestelle (AU) Bestimmen einer Netzidentifizierung (HID) für jede Nutzereinheit auf der Grundlage von hardwarebasierten Konfigurationsparametern, die von dieser Nutzeinheit (PC) empfangen worden sind,
• Registrieren der Nutzeridentifizierung (HID) in einer Datenbank (BD) des Servers der Vergabestelle (AU) durch Verbinden der Netzidentifizierungen (HID) mit den Daten des Zertifikats (C), so dass damit die Daten des Zertifikats (C) eine Vielzahl von Verknüpfungen aufweisen, wobei jede Verknüpfung auf eine unterschiedliche Netzidentifizierung (HID) verweist, die auf eindeutige Art und Weise eine von dem Inhaber benutzte Nutzereinheit (PC) identifiziert.

2. Verfahren nach Anspruch 1, **dadurch gekennzeichnet, dass** das Speichern einer Identifizierung (HID) in Verbindung mit dem Zertifikat (C) der Eingabe eines Zugangswortes (PIN) durch den Inhaber unterworfen ist.

3. Verfahren nach Anspruch 2, **dadurch gekennzeichnet, dass** das mit dem Zertifikat verknüpfte Zugangswort (PIN) von dem Inhaber des Zertifikats über einen Weg zugeht, der von dem verschieden ist, über den das Zertifikat übermittelt worden ist.

4. Verfahren nach Anspruch 2, **dadurch gekennzeichnet, dass** das mit dem Zertifikat verknüpfte Zugangswort (PIN) während des Vorgangs des Verbindens des Zertifikats (C) mit den Netzidentifizierungen (HID) in der Datenbank der Vergabestelle (AU) zeitweise inhibiert wird.

5. Verfahren nach Anspruch 1, **dadurch gekennzeichnet, dass** jede Netzidentifizierung (HID) aus einem Identifizierglied besteht, das die hardwarebasierte Konfiguration der Nutzereinheit so abbildet, dass eine Adresse oder eine Zahl auf eindeutige Weise die Einheit in dem Netz identifiziert, an das sie angeschlossen ist.

6. Verfahren nach Anspruch 1, **dadurch gekennzeichnet, dass** bei dem Zugriff auf einen Dienst bei einem Dienstanbieter (SP) durch die Nutzereinheit (PC) eine Verifikationsphase durchgeführt wird, wobei das Verfahren die folgenden Schritte aufweist:
• Identifizieren des Inhabers durch Übermitteln des Zertifikats (C) an den Diensteanbieter (PC),
• Bestimmen der der Nutzereinheit eigenen Netzidentifizierung (HID) durch den Diensteanbieter (SP),
• Übermitteln der durch das Zertifikat (C) und der Netzidentifizierung (HID) gebildeten Gesamtheit an die Vergabestelle (AU),
• Verifizieren der Gesamtheit durch Vergleich der in der Datenbank (BD) gespeicherten Informationen während der Initialisierungsphase und
• Übermitteln des Ergebnisses des Vergleichs an den Dienstanbieter (SP), der den ursprünglich von dem Nutzer nachgefragten Dienst in Abhängigkeit des Resultats freigibt.
